# EUROPÄISCHE PATENTSCHRIFT

(11) **EP 2 233 998 B1**
(45) Veröffentlichungstag und Bekanntmachung des Hinweises auf die Patenterteilung: **21.11.2018**
(21) Anmeldenummer: 10002259.9
(22) Anmeldetag: 05.03.2010
(51) Int. Cl.: G05D 16/06, G05D 16/02

(54) **Druckregelventil**
Pressure control valve
Soupape de réglage de pression

(30) Priorität: 25.03.2009 DE 102009014812
(43) Veröffentlichungstag der Anmeldung: 29.09.2010
(73) Patentinhaber: FESTO AG & Co. KG, 73734 Esslingen (DE)
(72) Erfinder: Jachmann, Robert, 73099 Adelberg (DE); Zaiss, Stefan, 70327 Stuttgart (DE); Fischer, Andreas, 73734 Esslingen (DE)
(74) Vertreter: Patentanwälte Magenbauer & Kollegen Partnerschaft mbB

(56) Entgegenhaltungen:
- DE-A1- 3 211 889
- DE-C- 872 908
- US-A- 3 545 465

## Beschreibung

Die Erfindung betrifft ein Druckregelventil, mit einem mit einem Primärdruck beaufschlagbaren Primärkanal, ferner mit einem den Abgriff eines geregelten Sekundärdruckes ermöglichenden und zu einem Sekundäranschluss führenden Sekundärkanal, und mit einem den Durchfluss zwischen dem Primärkanal und dem Sekundärkanal steuernden Ventilglied, dessen Stellung durch ein mit ihm zusammenwirkendes Steuerglied vorgegeben wird, das einen beweglichen Wandabschnitt einer mit dem Sekundärkanal in Fluidverbindung stehenden Steuerkammer bildet und durch eine Sekundärdruck-Vorgabekraft beaufschlagt ist, wobei zur Fluidverbindung zwischen der Steuerkammer und dem Sekundärkanal zwei zueinander parallel geschaltete Verbindungskanäle vorhanden sind, wobei in den einen, ersten Verbindungskanal ein eine Fluidströmung in die Steuerkammer zulassendes Rückschlagventil eingeschaltet ist und der andere, zweite Verbindungskanal einen hierzu funktionell parallel geschalteten und ständig offenen Strömungsquerschnitt definiert, der geringer ist als der bei geöffnetem Rückschlagventil freigegebene Strömungsquerschnitt des ersten Verbindungskanals.

Druckregelventile werden unter anderem im Zusammenhang mit der Druckluftaufbereitung in Druckluftnetzen eingesetzt und dienen dazu, den am Sekundärkanal als Arbeitsdruck abgreifbaren Sekundärdruck unabhängig von Druckschwankungen weitgehend konstant zu halten. Optionale Sekundärentlüftungsmaßnahmen ermöglichen dabei eine Reduzierung des im Sekundärkanal anstehenden Sekundärdruckes bei durch den Betrieb angeschlossener Verbraucher bedingten sekundärseitigen Druckerhöhungen.

Ein aus der DE 100 02 752 C1 bekanntes Druckregelventil verfügt über ein den Druckfluss zwischen einem Primärkanal und einem Sekundärkanal vorgebendes Ventilglied, dessen Stellung durch ein mit ihm bewegungsgekoppeltes Steuerglied vorgegeben wird, das einerseits von einer durch Federmittel vorgegebenen Sekundärdruck-Vorgabekraft und andererseits von dem im Sekundärkanal herrschenden Sekundärdruck beaufschlagt wird. Das Steuerglied bildet einen beweglichen Wandabschnitt einer Steuerkammer, die mittels eines einzigen, ständig offenen Verbindungskanals mit dem Sekundärkanal kommuniziert. Die Steuerkammer ist durch eine Trennwand von dem Sekundärkanal abgetrennt, die von einem die antriebsmäßige Kopplung zwischen dem Steuerglied und dem Ventilglied bewerkstelligenden Stößel durchsetzt ist. Der Stößel ist bezüglich der Trennwand durch einen ihn umschließenden Dichtungsring abgedichtet.

Die regelungstechnische Auslegung des bekannten Druckregelventils ist vor allem bei großen zu steuernden Durchflüssen sehr problematisch. Um ein schnelles Ansprechen des Steuergliedes auf sekundärseitig sinkenden Fluidverbrauch und folglich ansteigenden Sekundärdruck zu erhalten, sollte der Strömungsquerschnitt des Verbindungskanals möglichst groß sein. Ein großer Strömungsquerschnitt hat allerdings den Nachteil, dass die aus Steuerglied und Ventilglied kombinierte Steuereinrichtung sehr leicht zu kräftigem Schwingen angeregt wird, wenn bei einer anderen Betriebssituation der Fluidverbrauch am Ausgang des Sekundärkanals steigt und der Sekundärdruck folglich rasch abfällt. Dieser Schwingungsneigung kann zwar mechanisch dadurch entgegengewirkt werden, dass unter anderem der den Stößel bezüglich der Trennwand abdichtende Dichtungsring mit relativ großer radialer Vorspannung montiert wird und somit eine Reibkraft aufgebaut wird, die zu einer Verlangsamung der Bewegungen des Steuergliedes führt. Diese Maßnahme führt jedoch zu einem erhöhten Verschleiß und einer ausgeprägten Hysterese in der Kennlinie des Druckregelventils.

Alternativ wäre auch denkbar, die Schwingungsproblmatik durch eine Reduzierung des vom Verbindungskanal vorgegebenen Strömungsquerschnittes zu verringern. Dies erkauft man sich allerdings mit dem Nachteil eines sogenannten Überschwingens des Steuergliedes bei sekundärseitig sinkendem Fluidverbrauch. Der Druck in der Steuerkammer steigt dann stark zeitverzögert zum Sekundärdruck an und erreicht den Wert des gewünschten Sekundärdruckes erst dann, wenn der sekundärseitig abgreifbare Arbeitsdruck schon weit über den Soll-Sekundärdruck angestiegen ist.

Aus der DE 32 11 889 A1 ist bereits ein Gasdruckregler bekannt, bei dem zur Dämpfung von Schwingungen des Ausgangsdrucks zwischen dem Auslasskanal und einer von einer Reglermembran begrenzten unteren Membrankammer ein gedrosselter Verbindungskanal vorgesehen ist. Zusätzlich kann durch ein Ventil, das sich bei Schwankungen des Ausgangsdruckes in einer Richtung öffnen kann, eine diesen Verbindungskanal umgehende Verbindung hergestellt werden.

Aus der US 3 545 465 A ist ein Druckregelventil der eingangs genannten Art bekannt, bei dem eine Membran eine Steuerkammer begrenzt, die über zwei zueinander parallel geschaltete und getrennt voneinander ausgebildete Verbindungskanäle mit einem Sekundärkanal kommuniziert. In den einen Verbindungskanal ist ein Rückschlagventil eingeschaltet, der andere Verbindungskanal ist als Drosselkanal ausgebildet.

Die vorliegende Erfindung hat sich zum Ziel gesetzt, Maßnahmen vorzuschlagen, um der Schwingungs- und Überschwingungsproblematik zu begegnen.

Zur Lösung dieser Aufgabe ist in Verbindung mit den eingangs genannten Merkmalen vorgesehen, dass die beiden Verbindungskanäle über einen gemeinsamen Abgriffskanal mit dem Sekundärkanal verbunden sind, wobei der gemeinsame Abgriffskanal mit einer Abgriffsöffnung in den Sekundärkanal einmündet, die zur Umfangswand des Sekundärkanals beabstandet angeordnet und dabei mit gleicher Ausrichtung wie der Sekundäranschluss in Richtung zum Sekundäranschluss orientiert ist.

Ein derart ausgebildetes Druckregelventil kann relativ problemlos so ausgelegt werden, dass es weder zum Schwingen noch zum sogenannten Überschwingen neigt. Auch bedarf es keiner bewusst erhöhten Reibung, um das Bewegungsverhalten des Steuergliedes zu dämpfen, so dass die Hysterese der Reglerkennlinie sehr gering ist, und auch der Verschleiß reduziert werden kann. Diese Vorteile gelten auch bei einer Auslegung für hohe maximale Durchflüsse. Sinkt der sekundärseitige Fluidverbrauch, kann der hierdurch ansteigende Sekundärdruck das Rückschlagventil öffnen und einen entsprechenden Druckanstieg in der Steuerkammer mit keiner oder nur minimaler Verzögerung hervorrufen, so dass das Steuerglied umgehend auf die sekundärseitige Druckänderung reagieren kann. Ein Überschwingen kann somit nicht mehr auftreten. Die Schwingneigung wird dadurch reduziert, dass bei sekundärseitig abfallendem Druck aufgrund des dann schließenden Rückschlagventils eine Druckentlastung der Steuerkammer nurmehr durch den dem Rückschlagventil parallelgeschalteten Strömungsquerschnitt möglich ist, der in angemessener Weise geringer ist als der bei offenem Rückschlagventil freigegebene Strömungsquerschnitt. Folglich kann der Druckabbau in der Steuerkammer nur verlangsamt stattfinden und ein Anregen zu Schwingungen wird verhindert.

Zur Fluidverbindung zwischen der Steuerkammer und dem Sekundärkanal sind zwei zueinander parallelgeschaltete Verbindungskanäle vorhanden, von denen der eine, erste Verbindungskanal mit dem Rückschlagventil ausgestattet ist, und der andere zweite Verbindungskanal den verglichen mit dem offenen Rückschlagventil geringeren Strömungsquerschnitt definiert. Eine solche Bauform ist relativ einfach herstellbar. Der Strömungsquerschnitt des zweiten Verbindungskanals ist hierbei ständig offen und bedarf keiner Regulierung durch ein Ventilglied. Das Rückschlagventil wird hierbei insbesondere so ausgelegt, dass es in der Schließstellung den zugeordneten ersten Verbindungskanal vollständig absperrt. Die beiden Verbindungskanäle münden über einen gemeinsamen Abgriffskanal in den Sekundärkanal ein. Letzteres ermöglicht die erfindungsgemäße Maßnahme, die Abgriffsöffnung beabstandet zur Kanalwand und insbesondere querschnittsmittig im Sekundärkanal zu platzieren, und zwar ausgerichtet in Richtung zum Sekundäranschluss, so dass nachteilige Strömungseinflüsse vorteilhaft vermieden werden. Wenn die gemeinsame Abgriffsöffnung mit Abstand zur Kanalwand des Sekundärkanals angeordnet ist und mit gleicher Ausrichtung wie der Sekundäranschluss zum Sekundäranschluss weist, wird - wie sich herausgestellt hat - die Reglerkennlinie positiv beeinflusst und das Regelungsverhalten ist weniger abhängig vom Querschnitt des Sekundäranschlusses. Letzteres hat den Vorteil, dass der Druckregler sekundärseitig ohne gravierende Beeinflussung des Regelungsverhaltens mit unterschiedlichen Nennweiten betrieben werden kann, was bei der Anwendung des Druckreglers eine hohe Flexibilität bietet.

Vorteilhafte Weiterbildungen der Erfindung gehen aus den Unteransprüchen hervor.

Das Rückschlagventil verfügt zweckmäßigerweise über ein federbelastet in seine Schließstellung vorgespanntes Absperrglied.

Zum Abstützen eines das Absperrglied beaufschlagenden Federmittels empfiehlt sich das Einsetzen einer Haltehülse in eine Wandung des Druckregelventils, wobei der die Haltehülse durchsetzende Hohlraum einen Längenabschnitt des ersten Verbindungskanals bilden kann.

Der zweite Verbindungskanal kann zweckmäßigerweise als Drosselkanal bezeichnet werden. Zur Vorgabe des Strömungsquerschnittes des zweiten Verbindungskanals kann in die Wandung des Druckregelventils ein bevorzugt hülsenförmiger, nach Art einer Drosselblende arbeitender Drosselkörper eingesetzt sein. Um die Auslegung des Reglers zu variieren, kann man Drosselkörper mit unterschiedlichen Strömungsquerschnitten bereitstellen, die wahlweise montierbar sind. Auch zur Veränderung der Drosselungsintensität verstellbare Drosselmittel können vorhanden sein.

Ungeachtet der erfindungsgemäßen Maßnahmen ist es vorteilhaft, den Durchtritt eines mit dem Steuerglied bewegungsgekoppelten Stößels durch eine die Steuerkammer begrenzende ortsfeste Trennwand mittels eines gummielastischen Dichtungsringes abzudichten. Ein solcher Dichtungsring kann verhindern, dass mit hohem Druck in den Sekundärkanal einströmendes Fluid durch einen zwischen dem Stößel und der Trennwand vorhandenen Spalt hindurch ungewollt in die Steuerkammer übertritt. Bedingt durch die erfindungsgemäßen Maßnahmen kann die radiale Vorspannung des Dichtungsringes jedoch sehr gering ausfallen, so dass die Beweglichkeit des Stößels und mithin des mit diesen kooperierenden Steuergliedes kaum beeinträchtigt wird.

Es ist zweckmäßig, den Verlauf der beiden Verbindungskanäle so zu wählen, dass sie in unmittelbarer Nachbarschaft an einer die Steuerkammer vom Sekundärkanal abtrennenden Trennwand in die Steuerkammer einmünden.

Um eine vorteilhafte Entlüftung des Sekundärkanals zu ermöglichen, ist zweckmäßigerweise ein gemeinsam vom Ventilglied und vom Steuerglied gebildetes Sekundärentlüftungsventil vorhanden. Es steuert einen das Steuerglied durchsetzenden, mit der Atmosphäre in Verbindung stehenden Entlüftungskanal. Wird das Steuerglied aufgrund eines ansteigenden Sekundärdruckes im Sinne einer Vergrößerung des Volumens der Steuerkammer ausgelenkt, kann es vom Ventilglied abheben, so dass eine Verbindung zwischen dem Sekundärkanal und dem Entlüftungskanal freigegeben ist.

Die Sekundärdruck-Vorgabekraft ist insbesondere variabel einstellbar, vorzugsweise manuell, bei Bedarf aber auch motorisch. Geliefert wird die Sekundärdruck-Vorgabekraft insbesondere von einer unter Vorspannung stehenden Federeinrichtung, wobei Mittel vorhanden sein können, um die Vorspannung zum Zwecke einer Veränderung der Sekundärdruck-Vorgabekraft zu variieren.

Nachfolgend wird die Erfindung anhand der beiliegenden Zeichnung näher erläutert. In dieser zeigen:

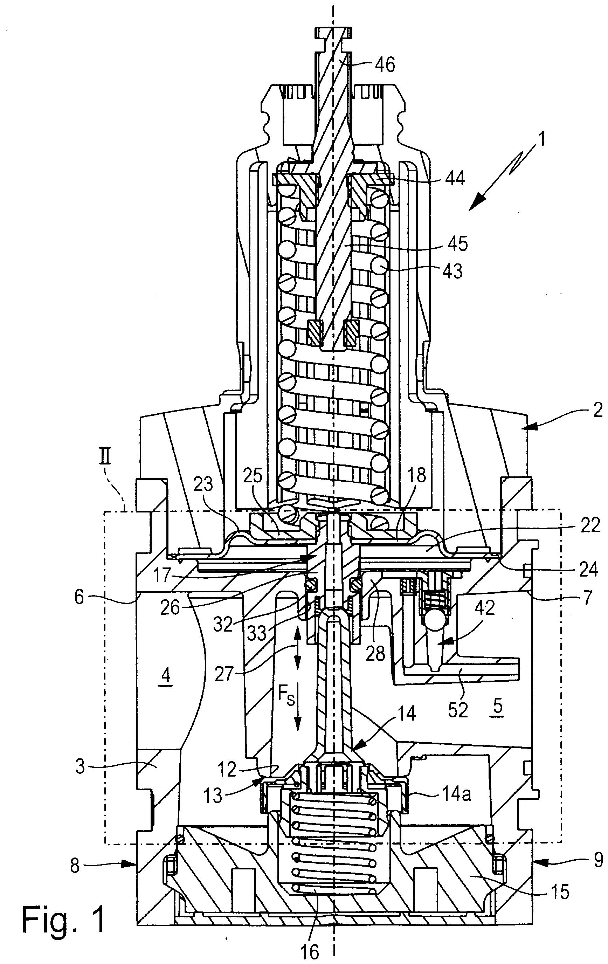

- Figur 1: eine bevorzugte Bauform des erfindungsgemäßen Druckregelventils in einem Längsschnitt, und

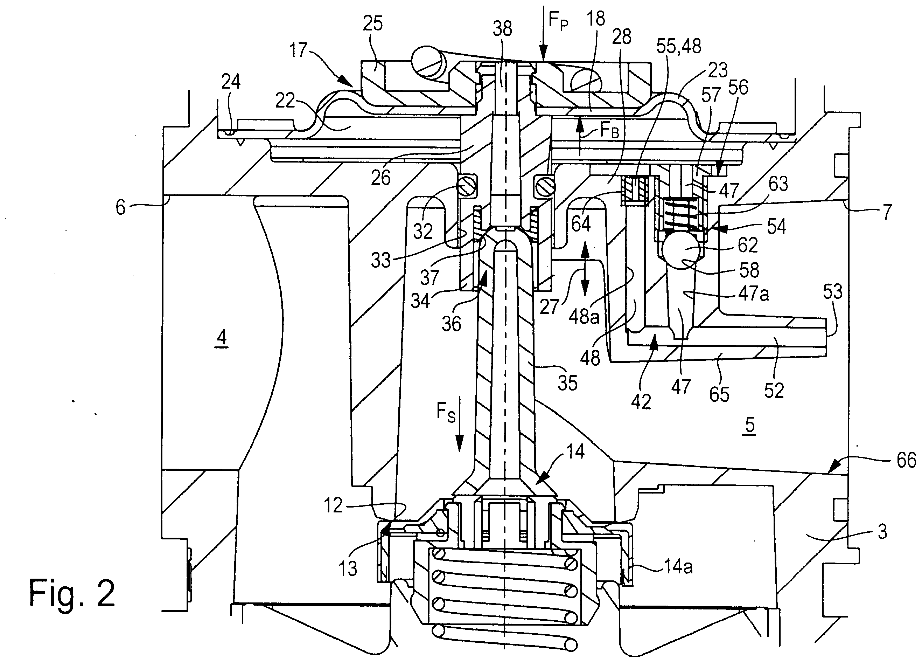

- Figur 2: den in Figur 1 strichpunktiert umrahmten Ausschnitt II in einer vergrößerten Darstellung.

Das insgesamt mit Bezugsziffer 1 bezeichnete Druckregelventil verfügt über ein Gehäuse 2 mit einem Gehäuse-Hauptkörper 3, in dem als Primärkanal 4 und als Sekundärkanal 5 bezeichnete Fluidkanäle verlaufen. Der Primärkanal 4 mündet über eine als Primäranschluss 6 bezeichnete Öffnung zu einer ersten Außenfläche 8 des Gehäuses 2 aus, der Sekundärkanal 5 über eine als Sekundäranschluss 7 bezeichnete Öffnung zu einer zweiten Außenfläche 9 des Gehäuses 2. Die beiden Außenflächen 8, 9 können beliebig orientiert sein, liegen beim Ausführungsbeispiel jedoch auf einander entgegengesetzten Seiten.

Im Betrieb des Druckregelventils 1 kann über den Primäranschluss 6 unter einem Primärdruck stehendes Druckmedium eingespeist werden. Am Sekundäranschluss 7 lässt sich unter einem Sekundärdruck stehendes Druckmedium abgreifen und zu einem oder mehreren Verbrauchern weiterleiten. Der Sekundärdruck ist in der Regel geringer als der Primärdruck und lässt sich in seiner Höhe durch das Druckregelventil 1 nach Bedarf vorgeben.

Bevorzugt wird das Druckregelventil 1 mit einem gasförmigen Medium, insbesondere Druckluft, betrieben.

Der Primärkanal 4 und der Sekundärkanal 5 stehen miteinander durch eine in dem Gehäuse-Hauptkörper 3 ausgebildete Überströmöffnung 12 in Verbindung. Die Überströmöffnung 12 ist von einem dem Primärkanal 4 zugewandten Ventilsitz 13 umrahmt, dem ein beispielsweise tellerförmig ausgebildeter Verschlussabschnitt 14a eines Ventilgliedes 14 gegenüberliegt. Sich an einem in den Gehäuse-Hauptkörper 3 eingesetzten Gehäuseboden 15 abstützende Federmittel 16 beaufschlagen das Ventilglied 14 in Richtung einer am Ventilsitz 13 unter Abdichtung anliegenden Schließstellung.

Durch eine auf es einwirkende Stellkraft Fs kann das Ventilglied 14 stufenlos unterschiedlich weit vom Ventilsitz 13 abgehoben werden, um einen mehr oder weniger großen Querschnitt der Überströmöffnung 12 freizugeben, durch den ein Durchfluss des vom Primärkanal 4 in den Sekundärkanal 5 überströmenden Druckmediums vorgegeben wird. Der Durchfluss bzw. die Strömungsrate ist umso größer, je weiter das Ventilglied 14 vom Ventilsitz 13 abgehoben ist.

Die Stellkraft Fs kann durch ein Steuerglied 17 auf das Ventilglied 14 ausgeübt werden. Das Steuerglied 17 definiert einen in gleicher Richtung wie das Ventilglied 14 beweglichen Wandabschnitt 18, der zusammen mit Wandabschnitten des Gehäuses 2 innerhalb desselben eine Steuerkammer 22 begrenzt.

Der bewegliche Wandabschnitt 18 ist beim Ausführungsbeispiel von einer im wesentlichen scheibenförmigen, elastisch verformbar ausgebildeten Membran 23 gebildet, die mit ihrem äußeren Randbereich 24 abgedichtet am Gehäuse 2 befestigt ist und die mit ihrem zentralen Bereich an einer Baugruppe bestehend aus einem starren Druckteller 25 und einem dazu koaxialen Stößel 26 befestigt ist. Der Druckteller 25 und der Stößel 26 sind fest miteinander verbunden und gehören auch zu dem gemäß Doppelpfeil 27 beweglichen Steuerglied 17.

Der Stößel 26 durchdringt gleitverschieblich und unter Abdichtung eine den Sekundärkanal 5 von der Steuerkammer 22 abtrennende Trennwand 28, bei der es sich um einen Wandabschnitt des Gehäuses 2, insbesondere des Gehäuse-Hauptkörpers 3 handelt. Die Abdichtung wird durch einen Dichtungsring 32 bewirkt, der in einer in der Mantelfläche des Stößels 26 ausgebildeten Ringnut gehalten ist und gleitverschieblich an der Umfangsfläche einer von dem Stößel 26 durchsetzten Durchbrechung 33 der Trennwand 28 anliegt.

Der Stößel 26 endet frei innerhalb des Sekundärkanals 5. Mit seinem dortigen Endabschnitt 34 beaufschlagt er einen von der gegenüberliegenden Seite her in den Sekundärkanal 5 hineinragenden Betätigungsvorsprung 35 des Ventilgliedes 14, der von dem Verschlussabschnitt 14a wegragt. Stößel 26 und Betätigungsvorsprung 35 liegen derart lose aneinander an, dass sie nur drückende Kräfte aufeinander übertragen können.

Diese Maßnahmen dienen dazu, um aus dem Steuerglied 17 und dem Ventilglied 14 ein insgesamt mit Bezugsziffer 36 bezeichnetes Sekundärentlüftungsventil zu bilden. Ein das Steuerglied 17 einschließlich des Stößels 26 koaxial durchsetzender Entlüftungskanal 38 mündet einenends außerhalb der Steuerkammer 22 zur Atmosphäre aus und hat seine entgegengesetzte Kanalmündung im Bereich des Endabschnittes 34 in Achsrichtung der Bewegung 27 orientiert, wobei sie von einem an dem Stößel 26 angeordneten weiteren Ventilsitz 37 umrahmt ist, an dem das Ventilglied 14 mit seinem Betätigungsvorsprung 35 stirnseitig anliegt.

Solange der Betätigungsvorsprung 35 an dem zweiten Ventilsitz 37 anliegt, ist der Entlüftungskanal 38 vom Sekundärkanal 5 abgetrennt. Sobald jedoch das Steuerglied 17 von dem Betätigungsvorsprung 35 abhebt, liegt die von dem zweiten Ventilsitz 37 umrahmte Kanalmündung des Entlüftungskanals 38 frei und stellt eine Verbindung des Sekundärkanals 5 zur Atmosphäre her.

Eine insgesamt mit Bezugsziffer 42 bezeichnete Verbindungskanalanordnung stellt eine fluidische Verbindung zwischen dem Sekundärkanal 5 und der Steuerkammer 22 her. Dadurch kann der im Sekundärkanal 5 herrschende Sekundärdruck auch in der Steuerkammer 22 anstehen und das Steuerglied 17 über den beweglichen Wandabschnitt 18 mit einer der Stellkraft Fs entgegengesetzten Betätigungskraft F_{B} beaufschlagen.

Entgegengesetzt zu der Betätigungskraft F_{B} wirkt auf das Steuerglied 17 eine Sekundärdruck-Vorgabekraft F_{P} ein. Geliefert wird die Sekundärdruck-Vorgabekraft F_{P} von einer außerhalb der Steuerkammer 22 in dem Gehäuse 2 untergebrachten, drückend arbeitenden Federeinrichtung 43, die sich einenends an dem Druckteller 25 abstützt und andernends an eines sich am Gehäuse 2 abstützenden Beaufschlagungsteller 44. Die Sekundärdruck-Vorgabekraft F_{P} kann auch anderweitig bereitgestellt werden, beispielsweise durch einen Fluiddruck.

Die Sekundärdruck-Vorgabekraft F_{P} hängt von der eingestellten Vorspannung der Federeinrichtung 43 ab. Diese Vorspannung kann durch Verstellen des Beaufschlagungstellers 44 variiert werden. Exemplarisch sitzt der Beaufschlagungsteller 44 hierzu auf einer drehbaren Gewindespindel 45 und ist gleichzeitig bezüglich dem Gehäuse 2 verdrehgesichert, so dass ein Verdrehen der Gewindespindel 45 ein lineares Verstellen des Beaufschlagungstellers 44 zur Folge hat. Je nach Verstellrichtung wird die Federeinrichtung 43 dabei komprimiert oder entlastet.

Ein aus dem Gehäuse 2 herausragender Betätigungsabschnitt 46 der Gewindespindel 45 erlaubt die Einleitung des zum Verdrehen aufzubringenden Drehmomentes.

Auf das Ventilglied 14 wirkt dann im Öffnungssinne eine Stellkraft Fₛ ein, wenn die Sekundärdruck-Vorgabekraft Fp größer ist als die über die Verbindungskanalanordnung 42 vom aktuell herrschenden Sekundärdruck abgeleitete Betätigungskraft F_{B}. Ist der Sekundärdruck und mithin die Betätigungskraft F_{B} kleiner als die Sekundärdruck-Vorgabekraft F_{P}, wird das Ventilglied 14 vom Steuerglied 17 in eine Offenstellung verschoben, so dass durch die geöffnete Überströmöffnung 12 Druckmedium nachströmen kann, das eine Erhöhung des Sekundärdruckes bewirkt. Übersteigt der Sekundärdruck einen durch die Sekundärdruck-Vorgabekraft F_{P} vorgegebenen Sollwert, hebt das Steuerglied 17 von dem vom Ventilsitz 13 zurückgehaltenen Ventilglied 14 ab, so dass das Sekundärentlüftungsventil 36 die Offenstellung einnimmt und der Sekundärkanal 5 druckmäßig entlastet wird, mit der Folge, dass der aktuelle Sekundärdruck wieder verringert wird.

Die Verbindungskanalanordnung 42 weist einen ersten Verbindungskanal 47 und einen hierzu parallel geschalteten zweiten Verbindungskanal 48 auf. Beide Verbindungskanäle 47, 48 stehen einenends mit der Steuerkammer 22 und andernends mit dem Sekundärkanal 5 in Verbindung. Hierzu münden die beiden Verbindungskanäle 47, 48 getrennt voneinander in die Steuerkammer 22 ein.

Die getrennte Einmündung trifft nur für die Steuerkammer 22 zu. Zur Kommunikation mit dem Sekundärkanal 5 sind die beiden Verbindungskanäle 47, 48 gemeinsam an einen einzigen Abgriffskanal 52 angeschlossen, der mit einer Abgriffsöffnung 53 in den Sekundärkanal 5 einmündet.

Mit anderen Worten enthält die Verbindungskanalanordnung 42 einen von der Abgriffsöffnung 53 ausgehenden Abgriffskanal 52, der sich in die beiden getrennt voneinander in die Steuerkammer 22 einmündenden ersten und zweiten Verbindungskanäle 47, 48 aufspaltet.

In den Verlauf des ersten Verbindungskanals 47 ist ein Rückschlagventil 54 eingeschaltet, das eine Fluidströmung aus dem Sekundärkanal 5 in die Steuerkammer zulässt, wenn der im Sekundärkanal 5 herrschende Sekundärdruck größer ist als der in der Steuerkammer 22 herrschende, im folgenden als "Kammerdruck" bezeichnete Druck. In der Gegenrichtung sperrt das Rückschlagventil 54. Ist also der Kammerdruck höher als der Sekundärdruck, tritt kein Fluid durch den ersten Verbindungskanal 47 hindurch.

Der zweite Verbindungskanal 48 ist zweckmäßigerweise als Drosselkanal konzipiert und definiert einen ständig offenen maximalen Strömungsquerschnitt - im folgenden als "Strömungsquerschnitt 55" bezeichnet -, der kleiner ist als der bei maximal geöffnetem Rückschlagventil 54 von dem zweiten Verbindungskanal 48 freigegebene Strömungsquerschnitt. Die Differenz dieser Strömungsquerschnitte ist relativ groß, so dass der Strömungsquerschnitt 55 in Bezug auf den freigebaren Strömungsquerschnitt des Rückschlagventils 54 als Drosselquerschnitt bezeichnet werden kann.

Wenn ausgehend von gleichen Druckverhältnissen im Sekundärkanal 5 und in der Steuerkammer 22 aufgrund eines sich verringernden Fluidverbrauches eines an den Sekundäranschluss 7 angeschlossenen Verbrauchers der Sekundärdruck ansteigt, ermöglicht das hierdurch öffnende Rückschlagventil 54 einen praktisch verzögerungsfreien Anstieg des Kammerdruckes. Das Rückschlagventil 54 gibt dem Fluid einen großen Strömungsquerschnitt zum Überströmen aus dem Sekundärkanal 5 in die Steuerkammer 22 frei.

Das die Überströmöffnung 12 steuernde Ventilglied 14 schaltet somit äußerst rasch in die Schließstellung um.

Sinkt der Sekundärdruck anschließend wieder ab, schließt das Rückschlagventil 54, so dass das Fluid nurmehr über den reduzierten Strömungsquerschnitt 55 bzw. Drosselquerschnitt des ersten Verbindungskanals 47 aus der Steuerkammer 22 in den Sekundärkanal 5 zurückströmen kann. Aufgrund des geringen Fluiddurchsatzes wird die Steuerkammer 22 hierdurch nur langsam entlastet, so dass das Steuerglied 17 das Ventilglied 14 auch nur allmählich, quasi "gedämpft" in eine Offenstellung verlagert. Auf diese Weise wird verhindert, dass das Steuerglied 17 und das Ventilglied 14 zu Schwingungen von mitunter sehr großer Amplitude angeregt werden, was sich negativ auf das Regelungsverhalten auswirken würde und sogar Beschädigungen der Bauteile nach sich ziehen könnte.

Da bei einem Druckanstieg im Sekundärkanal 5 durch den großen freigegebenen Strömungsquerschnitt des Rückschlagventils 54 ein verzögerungsfreier entsprechender Druckaufbau in der Steuerkammer 22 stattfindet, wird auch wirksam das weiter vorne schon erläuterte sogenannte Überschwingen verhindert.

Beim Ausführungsbeispiel sind die beiden Verbindungskanäle 47, 48 unter Verwendung bohrungsartiger Vertiefungen 47a, 48a gebildet, die ausgehend von der an der Trennwand 28 angeordneten Bodenfläche 56 der Steuerkammer 22 in die Wandung des Gehäuses 2 eingebracht sind. In die eine (47a) dieser bohrungsartigen Vertiefungen 47a ist ausgehend von der Steuerkammer 22 eine Haltehülse 57 eingesetzt und insbesondere eingeschraubt, die mit Abstand vor einer als Ventilsitz 58 fungierenden Ringstufe endet, wobei zwischen ihr und dem Ventilsitz 58 ein in axialer Richtung bewegliches, bevorzugt kugelförmig ausgebildetes Absperrglied 62 angeordnet ist. Ein zweckmäßigerweise vorhandenes, zwischen der Haltehülse 57 und dem Absperrglied 62 angeordnetes Federmittel 63 drückt das Absperrglied 62 ständig in eine am Ventilsitz 58 anliegende Schließstellung.

Der die Haltehülse 57 axial durchsetzende Hohlraum bildet einen Längenabschnitt des ersten Verbindungskanals 47, durch den hindurch bei vom Ventilsitz 58 abgehobenem Absperrglied 62 eine Fluidströmung in die Steuerkammer 22 hinein möglich ist.

Der Querschnitt der anderen bohrungsartigen Vertiefung 48a ist größer als der vom ersten Verbindungskanal 47 insgesamt definierte maximale Strömungsquerschnitt 55. Letzterer wird von einem beim Ausführungsbeispiel hülsenförmig ausgebildeten Drosselkörper 64 vorgegeben, der vergleichbar der Haltehülse 57 von der Steuerkammer 22 her in die zugeordnete bohrungsartige Vertiefung 48a eingesetzt und insbesondere eingeschraubt ist. Sein axial durchgehender Hohlraum bildet einen Längenabschnitt des zweiten Verbindungskanals 48, wobei dieser Längenabschnitt den Strömungsquerschnitt 55 definiert. Der Drosselkörper 64 fungiert also quasi als Drosselblende.

Durch wahlweises Einsetzen unterschiedlicher Drosselkörper 64 mit sich voneinander unterscheidenden Strömungsquerschnitten 55, kann das bei absinkendem Sekundärdruck auftretende Regelverhalten beeinflusst werden.

Die beiden Verbindungskanäle 47, 48 münden zweckmäßigerweise nebeneinander, insbesondere in unmittelbarer Nachbarschaft in die Steuerkammer 22 ein.

Beim Ausführungsbeispiel weist die Trennwand 28 einen radial in den Sekundärkanal 5 hineinragenden Kanalfortsatz 65 auf, in dem sich die beiden Verbindungskanäle 47, 48 und der gemeinsame Abgriffskanal 52 erstrecken. Der Kanalverlauf ist so gewählt, dass die Abgriffsöffnung 53 mit allseitigem radialen Abstand zur Umfangswand 66 des Sekundärkanals 5 in den Sekundärkanal 5 einmündet, zweckmäßigerweise in der Querschnittsmitte desselben. Außerdem weist die Abgriffsöffnung 53 in Richtung zum Sekundäranschluss 7. Aufgrund der sich hierbei im Bereich der Abgriffsöffnung 53 einstellenden Strömungsverhältnisse ist der Kammerdruck regelmäßig geringfügig kleiner als der aktuelle Sekundärdruck, was die Reglerkennlinie positiv beeinflusst, weil dem Problem des sogenannten, beim Verformen der Federeinrichtung 43 auftretenden Verstimmens entgegengewirkt wird.

## Patentansprüche

1. Druckregelventil, mit einem mit einem Primärdruck beaufschlagbaren Primärkanal (4), ferner mit einem den Abgriff eines geregelten Sekundärdruckes ermöglichenden und zu einem Sekundäranschluss (7) führenden Sekundärkanal (5), und mit einem den Durchfluss zwischen dem Primärkanal (4) und dem Sekundärkanal (5) steuernden Ventilglied (14), dessen Stellung durch ein mit ihm zusammenwirkendes Steuerglied (17) vorgegeben wird, das einen beweglichen Wandabschnitt (18) einer mit dem Sekundärkanal (5) in Fluidverbindung stehenden Steuerkammer (22) bildet und durch eine Sekundärdruck-Vorgabekraft beaufschlagt ist, wobei zur Fluidverbindung zwischen der Steuerkammer (22) und dem Sekundärkanal (5) zwei zueinander parallel geschaltete Verbindungskanäle (47, 48) vorhanden sind, wobei in den einen, ersten Verbindungskanal (47) ein eine Fluidströmung in die Steuerkammer (22) zulassendes Rückschlagventil (54) eingeschaltet ist und der andere, zweite Verbindungskanal (48) einen hierzu funktionell parallel geschalteten und ständig offenen Strömungsquerschnitt (55) definiert, der geringer ist als der bei geöffnetem Rückschlagventil (54) freigegebene Strömungsquerschnitt des ersten Verbindungskanals (47), **dadurch gekennzeichnet, dass** die beiden Verbindungskanäle (47, 48) über einen gemeinsamen Abgriffskanal (52) mit dem Sekundärkanal (5) verbunden sind, wobei der gemeinsame Abgriffskanal (52) mit einer Abgriffsöffnung (53) in den Sekundärkanal (5) einmündet, die zur Umfangswand (66) des Sekundärkanals (5) beabstandet angeordnet und dabei mit gleicher Ausrichtung wie der Sekundäranschluss (7) in Richtung zum Sekundäranschluss (7) orientiert ist.

2. Druckregelventil nach Anspruch 1, **dadurch gekennzeichnet, dass** die Abgriffsöffnung (53) in der Querschnittsmitte des Sekundärkanals (5) platziert ist.

3. Druckregelventil nach Anspruch 1 oder 2, **dadurch gekennzeichnet, dass** das Rückschlagventil (54) ein federbelastet in eine Schließstellung vorgespanntes, insbesondere kugelförmig ausgebildetes Absperrglied (62) aufweist.

4. Druckregelventil nach Anspruch 3, **dadurch gekennzeichnet, dass** das Rückschlagventil (54) eine in eine Wandung des Druckregelventils (1) eingesetzte und insbesondere eingeschraubte Haltehülse (57) aufweist, deren Hohlraum einen Längenabschnitt des ersten Verbindungskanals (47) bildet und an der sich ein Federmittel (63) abstützt, das das Absperrglied (62) in Richtung eines zweckmäßigerweise unmittelbar an der Wandung des Druckregelventils (1) ausgebildeten Ventilsitzes (58) beaufschlagt.

5. Druckregelventil nach einem der Ansprüche 1 bis 4, **dadurch gekennzeichnet, dass** der Strömungsquerschnitt (55) des zweiten Verbindungskanals (48) durch einen in eine Wandung des Druckregelventils (1) eingesetzte und insbesondere eingeschraubten Drosselkörper (64) vorgegeben ist.

6. Druckregelventil nach Anspruch 5, **dadurch gekennzeichnet, dass** der Drosselkörper (64) hülsenförmig ausgebildet ist, wobei der ihn durchsetzende Hohlraum einen Längenabschnitt des zweiten Verbindungskanals (48) bildet.

7. Druckregelventil nach einem der Ansprüche 1 bis 6, **dadurch gekennzeichnet, dass** die Steuerkammer (22) durch eine ortsfeste Trennwand (28) von dem Sekundärkanal (5) abgetrennt ist, wobei das Steuerglied (17) über einen die Trennwand (28) gleitverschieblich durchsetzenden Stößel (26) mit dem Ventilglied (14) zusammenwirkt.

8. Druckregelventil nach Anspruch 7, **dadurch gekennzeichnet, dass** innerhalb einer von dem Stößel (26) durchsetzten Durchbrechung (33) der Trennwand (28) ein den Stößel (26) koaxial umschließender Dichtungsring (32) angeordnet ist.

9. Druckregelventil nach Anspruch 7 oder 8 in Verbindung mit einem der Ansprüche 1 bis 6, **dadurch gekennzeichnet, dass** die beiden Verbindungskanäle (47, 48), insbesondere nebeneinanderliegend, an der Trennwand (28) in die Steuerkammer (22) einmünden.

10. Druckregelventil nach einem der Ansprüche 1 bis 9, **dadurch gekennzeichnet, dass** das Ventilglied (14) zusammen mit dem Steuerglied (17) ein Sekundärentlüftungsventil (36) bildet, das einen das Steuerglied (17) durchsetzenden Entlüftungskanal (38) steuert, der in einer Offenstellung des Sekundärentlüftungsventils (36) eine Verbindung zwischen dem Sekundärkanal (5) und der Atmosphäre herstellt.

11. Druckregelventil nach einem der Ansprüche 1 bis 10, **dadurch gekennzeichnet, dass** die Sekundärdruck-Vorgabekraft variabel vorgebbar ist und zweckmäßigerweise von einer unter Vorspannung stehenden Federeinrichtung (43) geliefert wird.

## Claims

1. Pressure-control valve, with a primary passage (4) which may be supplied with a primary pressure, also with a secondary passage (5) allowing the tapping of a controlled secondary pressure and leading to a secondary port (7), and with a valve member (14) controlling the throughflow between the primary passage (4) and the secondary passage (5) and the position of which is preset by a control member (17) interacting with it and forming a movable wall section (18) of a control chamber (22) in fluidic connection with the secondary passage (5) and acted upon by a secondary pressure-presetting force, wherein for fluidic connection between the control chamber (22) and the secondary passage (5) there are provided two connecting passages (47, 48) connected parallel to one another, wherein there is inserted in the one first connecting passage (47) a non-return valve (54) allowing a fluid flow into the control chamber (22), and the other second connecting passage (48) defines a flow cross-section (55) which is functionally parallel-connected and constantly open, and smaller than the flow cross-section of the first connecting passage (47) which is made free with the non-return valve (54) open, **characterised in that** the two connecting passages (47, 48) are connected to the secondary passage (5) via a common tapping passage (52), wherein the common tapping passage (52) leads into the secondary passage (5) at a tap hole (53) which is arranged with clearance from the peripheral wall (66) of the secondary passage (5) and at the same time is oriented with the same alignment as the secondary port (7) in the direction to the secondary port (7).

2. Pressure-control valve according to claim 1, **characterised in that** the tap hole (53) is located in the cross-sectional centre of the secondary passage (5).

3. Pressure-control valve according to claim 1 or 2, **characterised in that** the non-return valve (54) has a shut-off member (62), in particular spherical, biased by spring-loading into a closed position.

4. Pressure-control valve according to claim 3, **characterised in that** the non-return valve (54) has a holding sleeve (57), inserted and in particular screwed into a wall of the pressure-control valve (1), and with its hollow space forming a length section of the first connecting passage (47) and on which are supported spring means (63) which press the shut-off member (62) in the direction of a valve seat (58) formed directly on the wall of the pressure-control valve (1).

5. Pressure-control valve according to any of claims 1 to 4, **characterised in that** the flow cross-section (55) of the second connecting passage (48) is preset by a restrictor body (64) inserted and in particular screwed into a wall of the pressure-control valve (1).

6. Pressure-control valve according to claim 5, **characterised in that** the restrictor body (64) is sleeve-shaped, wherein the hollow space passing through it forms a length section of the second connecting passage (48).

7. Pressure-control valve according to any of claims 1 to 6, **characterised in that** the control chamber (22) is separated from the secondary passage (5) by a stationary partition wall (28), wherein the control member (17) interacts with the valve member (14) via a plunger (26) which slides through the partition wall (28).

8. Pressure-control valve according to claim 7, **characterised in that** a seal ring (32) which coaxially encompasses the plunger (26) is fitted inside an opening (33) in the partition wall (28) through which the plunger (26) passes.

9. Pressure-control valve according to claim 7 or 8 in conjunction with any of claims 1 to 6, **characterised in that** the two connecting passages (47, 48) lead into the control chamber (22) at the partition wall (28), in particular adjacent to one another.

10. Pressure-control valve according to any of claims 1 to 9, **characterised in that** the valve member (14) together with the control member (17) forms a secondary vent valve (36) which controls a vent passage (38) passing through the control member (17) and which, in an open position of the secondary vent valve (36), makes a connection between the secondary passage (5) and the atmosphere.

11. Pressure-control valve according to any of claims 1 to 10, **characterised in that** the secondary pressure presetting force may be preset variably and is expediently supplied by a spring device (43) which is under preload.

## Revendications

1. Soupape de régulation de pression, avec un canal primaire (4) pouvant être soumis à l'action d'une pression primaire, en outre avec un canal secondaire (5) permettant le prélèvement d'une pression secondaire régulée et menant à un raccord secondaire (7), et avec un organe de soupape (14) commandant le débit entre le canal primaire (4) et le canal secondaire (5), dont la position est spécifiée par un organe de commande (17) coopérant avec lui, qui forme une section de paroi (18) mobile d'une chambre de commande (22) en communication fluidique avec le canal secondaire (5) et qui est soumis à l'action d'une force spécifiée de pression secondaire, dans laquelle deux canaux de liaison (47, 48) montés en parallèle l'un par rapport à l'autre sont présents aux fins de la communication fluidique entre la chambre de commande (22) et le canal secondaire (5), dans laquelle une soupape anti-retour (54) autorisant un écoulement de fluide dans la chambre de commande (22) est activée dans un premier canal de liaison (47) et l'autre second canal de liaison (48) définit une section transversale d'écoulement (55) monté en parallèle de manière fonctionnelle par rapport à ce dernier et ouverte en permanence, qui est plus petite que la section transversale d'écoulement, dégagée lorsque la soupape anti-retour (54) est ouverte, du premier canal de liaison (47), **caractérisée en ce que** les deux canaux de liaison (47, 48) sont reliés au canal secondaire (5) par l'intermédiaire d'un canal de prélèvement (52) commun, dans laquelle le canal de prélèvement (52) commun débouche par une ouverture de prélèvement (53) dans le canal secondaire (5), qui est disposée de manière espacée par rapport à la paroi périphérique (66) du canal secondaire (5) et est orientée ce faisant, avec une orientation identique à celle du raccord secondaire (7), en direction du raccord secondaire (7).

2. Soupape de régulation de pression selon la revendication 1, **caractérisée en ce que** l'ouverture de prélèvement (53) est placée au milieu de la section transversale du canal secondaire (5).

3. Soupape de régulation de pression selon la revendication 1 ou 2, **caractérisée en ce que** la soupape anti-retour (54) présente un organe de fermeture (62) précontraint par une contrainte de ressort dans une position de fermeture, en particulier réalisé de manière à présenter une forme sphérique.

4. Soupape de régulation de pression selon la revendication 3, **caractérisée en ce que** la soupape anti-retour (54) présente une douille de maintien (57) insérée et en particulier vissée dans une paroi de la soupape de régulation de pression (1), dont la cavité forme une section longitudinale du premier canal de liaison (47) et au niveau de laquelle un moyen de ressort (63) prend appui, qui soumet à une action l'organe de fermeture (62) en direction d'un siège de soupape (58) réalisé de manière appropriée directement au niveau de la paroi de la soupape de régulation de pression (1).

5. Soupape de régulation de pression selon l'une quelconque des revendications 1 à 4, **caractérisée en ce que** la section transversale d'écoulement (55) du deuxième canal de liaison (48) est spécifiée par un corps d'étranglement (64) inséré et en particulier vissé dans une paroi de la soupape de régulation de pression (1).

6. Soupape de régulation de pression selon la revendication 5, **caractérisée en ce que** le corps d'étranglement (64) est réalisé de manière à présenter une forme de douille, dans laquelle la cavité le traversant forme une section longitudinale du deuxième canal de liaison (48).

7. Soupape de régulation de pression selon l'une quelconque des revendications 1 à 6, **caractérisée en ce que** la chambre de commande (22) est séparée par une cloison de séparation (28) stationnaire du canal secondaire (5), dans laquelle l'organe de commande (17) coopère avec l'organe de soupape (14) par l'intermédiaire d'un coulisseau (26) traversant par un coulissement glissant la cloison de séparation (28).

8. Soupape de régulation de pression selon la revendication 7, **caractérisée en ce qu'**une bague d'étanchéité (32) renfermant de manière coaxiale le coulisseau (26) est disposée à l'intérieur d'un ajour (33), traversé par le coulisseau (26), de la cloison de séparation (28).

9. Soupape de régulation de pression selon la revendication 7 ou 8 en lien avec l'une quelconque des revendications 1 à 6, **caractérisée en ce que** les deux canaux de liaison (47, 48) débouchent, en particulier de manière juxtaposée, au niveau de la cloison de séparation (28) dans la chambre de commande (22).

10. Soupape de régulation de pression selon l'une quelconque des revendications 1 à 9, **caractérisée en ce que** l'organe de soupape (14) forme conjointement avec l'organe de commande (17) une soupape d'évacuation de l'air secondaire (36), qui commande un canal d'évacuation de l'air (38) traversant l'organe de commande (17), qui établit, dans une position d'ouverture de la soupape d'évacuation de l'air secondaire (36), une liaison entre le canal secondaire (5) et l'atmosphère.

11. Soupape de régulation de pression selon l'une quelconque des revendications 1 à 10, **caractérisée en ce que** la force spécifiée de pression secondaire peut être spécifiée de manière variable et est fournie de manière appropriée par un dispositif de ressort (43) sous précontrainte.
